(19) Europäisches Patentamt
European Patent Office
Office européen des brevets

(11) **EP 0 953 179 B1**

(12) **EUROPEAN PATENT SPECIFICATION**

(45) Date of publication and mention
of the grant of the patent:
**15.04.2009 Bulletin 2009/16**

(51) Int Cl.:
***G06F 19/00*** (2006.01)   ***G01V 1/36*** (2006.01)

(21) Application number: **98957809.1**

(22) Date of filing: **11.11.1998**

(86) International application number:
**PCT/US1998/024030**

(87) International publication number:
**WO 1999/026179 (27.05.1999 Gazette 1999/21)**

(54) **SEISMIC DATA ACQUISITION AND PROCESSING USING NON-LINEAR DISTORTION IN A GROUNDFORCE SIGNAL**

SEISMISCHE DATENERFASSUNG UND -VERARBEITUNG MIT HILFE NICHTLINEARER VERZERRUNG IN EINEM BODENSIGNAL

ACQUISITION ET TRAITEMENT DE DONNEES SISMIQUES PAR UTILISATION D'UNE DISTORSION NON LINEAIRE DANS UN SIGNAL DE FORCE DE SOL

(84) Designated Contracting States:
**FR GB**

(30) Priority: **14.11.1997 US 970631**

(43) Date of publication of application:
**03.11.1999 Bulletin 1999/44**

(73) Proprietor: **WESTERN ATLAS INTERNATIONAL, INC.**
**Houston, TX 77042-3115 (US)**

(72) Inventors:
• **BARR, Frederick, J.**
  **Pearland, TX 77584 (US)**
• **PAFFENHOLZ, Josef**
  **Missouri City, TX 77489 (US)**

(74) Representative: **Vigars, Christopher Ian**
**HASELTINE LAKE,**
**Redcliff Quay,**
**120 Redcliff Street**
**Bristol BS1 6HU (GB)**

(56) References cited:
**US-A- 3 886 493**     **US-A- 4 339 810**
**US-A- 4 598 392**

• **LI XIAO-PING: "Elimination of ghost noise in vibroseis data by deconvolution" GEOPHYS PROSPECT; GEOPHYSICAL PROSPECTING NOV 1997 EUROPEAN ASSOC OF EXPLORATION GEOPHYSICISTS, THE HAGUE, NETHERLANDS, vol. 45, no. 6, November 1997 (1997-11), pages 909-929, XP002334004**
• **LI X ET AL: "Elimination of harmonic distortion in vibroseis data" GEOPHYSICS, SOCIETY OF EXPLORATION GEOPHYSICISTS. TULSA, US, vol. 60, no. 2, 1995, pages 503-516, XP002167804 ISSN: 0016-8033**

**Description**

The present invention is directed to seismic data processing, to pre-processing seismic data in which data generated by a vibrating source is received and prepared for data processing, and to methods for refining seismic field data.

Certain prior art seismic data acquisition and processing systems use a vibratory source to apply a force to the ground and measure subsequent motion caused by the application of this force at various receiver locations. By controlling the duration and frequency of the force a broad band signal with sufficient energy is achieved. By using the receiver motions and assumed force application a seismogram is constructed (typically by correlation with an estimate of the applied force) from which properties of the impedance function of the earth can be calculated. In certain systems data that is generated by a vibratory source is correlated with a reference sweep. A reference sweep signal is an ideal signal which the vibrator is told to put into the ground, which is often quite different from the actual signal which is generated. The typical estimate for the applied force is the mass weighted sum of the acceleration of the baseplate used in the vibrating source and the acceleration of the reaction mass used in the vibrator structure, called the groundforce.

One prior art method commonly used in the seismic industry for compressing seismic field data is that of crosscorrelating each seismic trace with a pilot sweep motions of the vibrator which are related to the actual vibrator applied force by a transfer function of a minimum phase, causal, linear system. This system relates the actual vibrator output with the measured vibrator motion or motions. A ratio is determined by dividing the vibratory seismic data by the measured motion or motions of the vibrator to remove the unknown applied force leaving the earth reflectivity times a time derivative divided by a minimum phase function. Minimum phase deconvolution is performed to remove the time derivative divided by the transfer function of minimum phase. The method may also include the steps of receiver ensemble deconvolution, statics correction, F-K (frequency-wave number domain) filtering for linear noise, zero phase spiking deconvolution and model dephasing. In this method, a signal directly related to the actual signal that the vibrator is sending into the ground is used in pre-processing. The vibrator motion or motions are measured to provide a signal that is used to process the data. Thus, the data is not correlated with a theoretical sweep signal, but is divided by a minimum phase relative of the actual transmitted signal in the frequency domain, which removes the actual transmitted signal from the determination. When solving for the earth reflectivity, data is basically divided by the vibrator groundforce multiplied by a transfer function of minimum phase, removing the vibrator force from the data. This leaves the earth reflectivity multiplied by a time derivative divided by a minimum phase transfer function, which ratio is then removed by minimum phase deconvolution.

Each recorded trace is inverted as follows:

$$C(\omega) = T(\omega)/A(\omega)$$

where:

C ($\omega$) =    Fourier transform of the inverted trace
T ($\omega$) =    Fourier transform of the recorded seismic trace

used to drive vibrators. The pilot sweep is typically a sinusoidal signal whose instantaneous frequency increases or decreases with time in a preprogrammed manner. Electronic systems are built into field recording systems to perform this mathematical computation prior to writing the resulting, compressed traces to magnetic tape. A shortcoming of this method is that it ignores distortions in the actual output of a vibrator unit caused by non-linearities in both the electro-hydraulic system and the elastic properties of the topsoil against which the vibrator's baseplate applies its force signal. This soil non-linearity can be expected to be different for each location where the vibrator inputs its force signal. These system non-linearities cause the actual force output signal from the vibrators to contain the fundamental pilot sweep signal as well as harmonics and sub-harmonics of that sweep signal. Hence, each subsurface reflection is represented in the uncompressed data by this distorted sweep signal. When the uncompressed data are crosscorrelated with the pilot sweep, the fundamental pilot sweep portion is compressed into the desired zero-phase Klauder wavelet. However the harmonics and sub-harmonics manifest themselves as coherent noise.

U.S. Patent 5,550,786 discloses a method for processing data from a system using an accelerometer on a vibrator's baseplate and an accelerometer on a reaction mass used with the vibrator structure. A signal which is minimum phase related to the actual force generated into the surface of the earth is measured and taken from a vibrator source directly, i.e., an actual signal [not a measured groundforce signal, but an accelerometer (baseplate or reaction mass) signal] is used in the process instead of a theoretical signal. A method is provided for recording and pre-processing high resolution vibratory source data for both land and marine environments which includes measuring the motion or

A (ω) =     Fourier transform of the baseplate or reaction mass accelerometer signal

The method applies a minimum phase bandpass filter and then relies upon statistical, spiking deconvolution of the resulting trace to obtain a minimum phase wavelet that represents each subsurface reflector in the trace. This method requires the application and proper function of spiking deconvolution to achieve correct results. The presence of random noise (including noise related to non-linearities in the vibrator electrohydraulic system and baseplate/soil coupling) in the inverted traces can compromise the effectiveness of the derived spiking deconvolution operator.

In another prior art method Li has attempted to eliminate ghost noise (non-linear noise related to electrohydraulic system and/or baseplate coupling) in uncorrelated seismic (e.g. vibroseis) data using an inversion approach similar to that of U.S. Patent 5,550,786, except that computed groundforce is used. In this system a recorded groundforce signal, known to be a better correlator for a seismogram than a pilot sweep itself, is used to deconvolve the vibrogram. In such a way a ghost sweep, produced by severe harmonic distortions in the groundforce signal both at negative and positive correlation times (if such a signal is used as the correlator), is eliminated automatically. This method eliminates the correlation noise caused by both the upsweep or by the downsweep pilot signal. Synthetic and real data are used to demonstrate the application of the inversion procedure and the results differ from those achieved with the correlation procedure. After a first inversion, a second filter (e.g. an inverse Q-filter) may be applied to eliminate stratigraphic effects.

Li noted that harmonic distortion occurs in most vibrator operations on land because nonlinear effects cause an actual baseplate signal to differ from the signal of the pilot sweep of the encoder. In choosing which signal to use to correlate a vibroseis trace, Li refers to the work of Seriff and Kim (1970) which provided a fundamental study according to which the harmonic distortion creates either a correlation-ghost forerunner or a tail at both positive and negative correlation times if the harmonically distorted sweep is used as the correlation operator. Seriff and Kim conclude that the correlation of the seismic trace with the harmonically distorted sweep is not desirable if the aim is the elimination of the correlation-ghost (sweeps) in the correlated trace. Li also noted that the baseplate signal, which is part of the groundforce, may in fact be a better correlator than the pilot sweep, because it represents the actual signal propagating into the earth citing Baeten and Ziolkowski, 1990, and that numerous methods to eliminate the harmonic distortion have been investigated during the last thirty years.

Another prior art method known as the pure phase shift filter (PPSF) method exploits the definition of a linear sweep and is implemented as a modification of known correlation processes. It is applied to synthetic and real data for practical results, and due to its mathematical background, is restricted to seismic data generated by upsweeps. Another common method, the variphase sweep method, attempts to eliminate the harmonic distortion of downsweeps. However, it is used to reduce harmonic distortion only with limited success, largely because it is difficult to implement and control with respect to quality (Martin, 1993).

In certain prior art systems, the correlation of a recorded seismogram with a groundforce signal (which includes harmonic distortions and inaccuracies in the feedback system of the vibrator), is based on a conventional convolution model. After the correlation, the seismogram resembles a shot seismogram, but with correlation-ghost noise (non-linear). The PPSF method eliminates the harmonic distortions in the groundforce signal before such a signal is used as the correlator. Provided that the convolution model is true and the groundforce signal is the signal which is propagating from the vibrator into the earth, correlation-ghost noise is eliminated by using deterministic deconvolution instead of carrying out a conventional correlation, which does not require the PPSF. The seismogram is deconvolved with the groundforce signal in the given sweep frequency range.

In one such method the deconvolution (refining) process is applied to uncorrelated seismic data. The convolution consists of the harmonically distorted sweep or one of its modifications, the response of the earth, and the stratigraphic filter. In one aspect the deconvolution procedure, as is usually done with the correlation procedure, is carried out in the frequency domain and only in the desired frequency range of the input sweep.

There has long been a need for an effective and efficient seismic data pre-processing method. There has been a need, recognized and addressed by the inventors of the present invention, for such a method that does not need to employ spiking deconvolution techniques. There has been a need, recognized and addressed by the present inventors, for a method in which the effects of the presence of random noise are reduced or eliminated.

The present invention discloses, in certain embodiments, a seismic data method for recording and processing vibratory source seismic data, the method including: applying with a vibratory source system a groundforce signal into earth at a selected location, the groundforce signal having a temporal duration and including a reference sweep signal and non-linear noise; recording the groundforce signal with recording apparatus; generating a filter for converting a time derivative of the groundforce signal to a desired short-duration wavelet which, in one aspect, has a temporal duration less than the temporal duration of the groundforce signal; recording at least one reflection signal from a location within the earth of said groundforce signal; and applying the filter to the at least one reflection signal to refine seismic data represented by the at least one reflection signal, thereby producing refined seismic data about the location within the earth.

The present invention discloses, in certain embodiments a new seismic data method which employs an actual groundforce signal rather than some other related signal, e.g. an accelerometer signal. Vibrator electronics of a seismic vibratory system having a baseplate and a reaction mass generate an ideal known reference sweep (also "fundamental" or "pilot") sweep signal, and a resulting actual groundforce signal is either computed using known techniques (including known techniques using known accelerometer systems) or is directly measured using an appropriate commercially available force plate system such as that manufactured and sold by geoMagic, Plano, Texas. This computed or directly measured groundforce signal is recorded along with the normal seismic reflection signals, e.g. with a surface geophone spread or other known sensors. A shaping filter (in one aspect in the frequency domain) is created, according to the present invention, to compress the measured groundforce signal creating a defined short-duration wavelet. The shaping filter is, in one aspect, in the "frequency domain" because this method employs a true representation of the time derivative of groundforce in terms of frequency. Groundforce is directly proportional to particle displacement including far field particle displacement (except for a time delay); the time derivative of displacement is velocity - and velocity of displacement is what is measured by one or more geophones. The vibratory source system may be located on land, on the earth surface below water, or in water above but not in contact with earth below the system. In one aspect a filter is computed that converts the time derivative of the recorded groundforce signal into a desired, short-duration wavelet signal as follows:

$$F(\omega) = \frac{W(\omega)}{i\omega G_F}$$

where:

w ($\omega$) =      Fourier transform of the desired, short-duration wavelet

$G_F$ ($\omega$) =      Fourier transform of the recorded force signal output of the vibrator

F ($\omega$) =      Fourier transform of the filter $\quad i = \sqrt{-1};\quad \omega = 2\pi f$

Frequency (f) is expressed in cycles per second. The seismic reflection signals are not crosscorrelated with the pilot sweep signal. Instead, the filter is applied to each trace recorded from the surface geophone spread that was generated by that vibrator sweep. By filtering out the groundforce signal (in the form of the created short-duration wavelet) from each reflected earth signal, a refined isolated earth reflectivity signal is obtained, i.e., seismic data uncontaminated with a noisy groundforce signal.

Using this method, the components of the vibrator's output signal (fundamental sweep, non-linear noise - harmonics and subharmonics) are constructively compressed into the desired wavelet, and the harmonic correlation noise is eliminated. Greater stability is achieved in the short-duration wavelet representing each reflection in the recorded data because shotpoint-to-shotpoint variations in topsoil non-linearity are removed from the data as are the noise effects related to non-linearities resulting from the operation of the electrohydraulic vibrator system. Thus, methods according to the present invention constructively use the harmonics and subharmonics of a groundforce signal that includes such harmonics and subharmonics as, what has been considered to be in the past, undesirable distortions of the signal. These harmonics and subharmonics (the non-linear noise) represent energy that may be used, along with the energy of the main signal, to produce a relatively energetic compressed short-duration wavelet based on which a useful shaping filter may be created for application to raw seismic data. In one aspect such application yields improved data which is more accurate than data produced by known methods such as the method of U.S. Patent 5,550,786 and the method of Li, mentioned above. For example, a known computed and/or ideal groundforce signal may include frequencies ranging from 10 to 120 Hertz; but subharmonics related to the 10 Hz part may be at a 5 Hz frequency and resulting harmonics may be at 20 Hz and 30 Hz. Certain prior art methods either ignore or seek to negate the effects of such non-linear noise. According to the present invention these subharmonics and harmonics are compressed, along with the ideal non-noise portion of the groundforce signal, to form the desired wavelet. Such wavelet formation itself may be done via known wavelet formation methods; but the present inventors are unaware of the creation of such a wavelet using frequencies outside the spectrum of the main signal for the refinement of vibratory source seismic data.

The desired wavelet may be (but is not limited to) a Klauder wavelet or a minimum phase wavelet.

A more particular description of embodiments of the invention briefly summarized above may be had by references to the embodiments which are shown in the drawings which form a part of this specification. These drawings illustrate certain preferred embodiments and are not to be used to improperly limit the scope of the invention as defined by the appended claims.

Fig. 1 is a schematic view of typical vibratory seismic data acquisition and processing system.

Fig. 2 is a schematic view of a system and method according to the present invention.

Fig. 3 is a graphical representation of an undistorted groundforce signal (i.e. without non-linear noise in the signal).

Fig. 4 is a graphical representation of a distorted groundforce signal (i.e. containing non-linear harmonic distortion or noise).

Fig. 5 is a graphical representation of the effect of a prior art correlation method as applied to the undistorted groundforce signal of Fig. 3.

Fig. 6 is a graphical representation of the effect of a prior art correlation method as applied to the distorted groundforce signal of Fig. 3.

Fig. 7 is a graphical representation of the effect of applying a shaping filter according to the methods of the present invention to the distorted groundforce signal of Fig. 3.

Fig. 8 is a graphical representation of the effect of applying a shaping filter according to the methods of the present invention to a distorted groundforce signal.

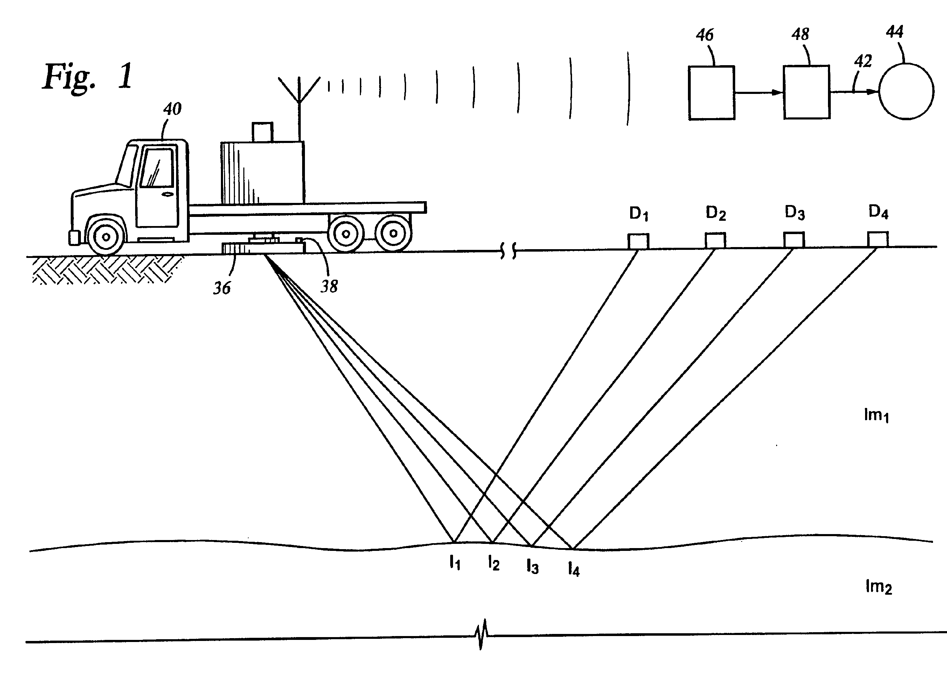

The system of Fig. 1 has a vibrator 36 with signal measuring apparatus 38 that measure the actual groundforce signal that is generated into the earth, both located on a truck 40.

The signal that is generated into the earth by vibrator 36 is reflected off the interface between subsurface impedance $Im_1$ and $Im_2$ at points $I_1$, $I_2$, $I_3$, and $I_4$. This reflected signal is detected by geophones $D_1$, $D_2$, $D_3$, and $D_4$, respectively. The signals generated by vibrator 36 on truck 40 are transmitted to recorder 46 for transfer to tape 48 for combination with raw seismic data received from geophones $D_1$, $D_2$, $D_3$, and $D_4$. The signals are then transmitted via radio link 42 to a master vibrator memory 44 where they are checked to determine their reliability and are stored for comparison at a later time. The received data signals and the raw seismic data stored on a tape 48 can be transferred to computers at other locations.

Methods of the present invention process this raw data and refine it, eliminating groundforce signal harmonic distortion effects. The measured signals are representative of the actual signals that are generated into the surface of the earth through the vibratory source. These measured signals are minimum phase relatives of the actual signals that are generated into the surface of the earth by this technique.

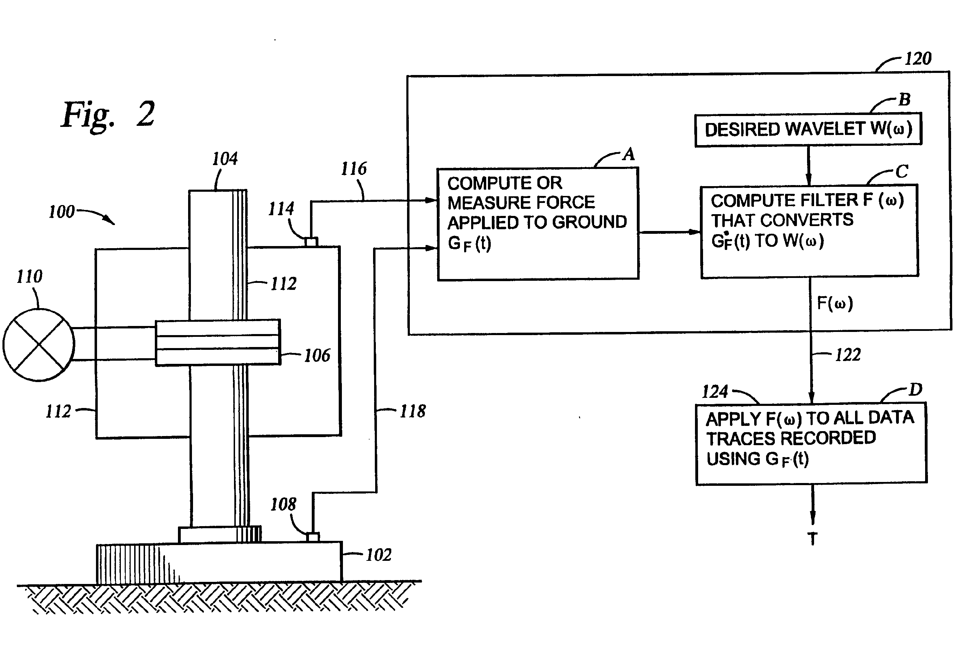

Fig. 2 shows a system 100 according to the present invention with a vibratory baseplate 102; a support post 104; a vibrating piston system (electrohydraulic) 106; a control valve 110 for the system 100; a reaction mass 112; a baseplate groundforce signal measuring system 108 connected to the baseplate 102; a reaction mass signal measuring system 114 connected to the reaction mass 112; a communication line 116 connecting the system 114 to a computer 120; a communication line 118 connecting the system 108 to the computer 120; and a communication line 122 connecting the computer 120 to another computer 124.

The system 108 may be any known accelerometer system used to measure, record and transmit an accelerometer signal from a baseplate. The system 114, similarly, may be any known accelerometer system used to measure a reaction mass acceleration. The signal that hits the soil is a combination of the reaction mass signal and the signal from the baseplate.

The computer 120 may be any known computer system suitable for receiving the signal(s) transmitted by the systems 108, 114 and for processing them as indicated schematically in Fig. 2 and as described herein, with appropriate storage, memory, computing and processing components therein. The computer 120 may be located at the site of the system 100 or remote therefrom and may, in one aspect, be on a truck (e.g. a truck 40 as in Fig. 1). Similarly, the computer 124 may be any known computer system suitable for applying the created shaping filter to one or more actual recorded seismic data traces. In one particular aspect, a single computer system is a combination of the computers 120 and 124. The computer 124 may be located at the site of the system 100 or remote therefrom. Any known data link system or communication system, including but not limited to wire, wireless, and satellite, may be used to link the system 100 and the computers 120, 124.

Fig. 2 shows steps A - C for generating the desired shaping filter F ($\omega$). In step D, this filter is applied to actual seismic data to produce processed, refined data T from which the effects of non-linear noise of the groundforce signal has been eliminated.

In Step A the computer produces a representation of the groundforce signal (which includes a reference or pilot sweep signal and harmonic distortions due to non-linearities discussed above) in terms of time, $G_F(t)$. This is either simply a measured signal representation (e.g. directly from a force measuring device) which is processed by the computer 120 to yield $G_F(t)$ or a computed signal computed from outputs from the accelerometers.

In Step B a mathematical representation W($\omega$) of a desired wavelet is produced, in one aspect a zero or minimum phase wavelet with a bandwidth equal to or greater than that of the reference (pilot) sweep signal. This is a desired ideal signal representative of the groundforce signal, a wavelet in which the energy of non-linear noise has been used and the effects of the noise then eliminated by converting it to useful seismic energy.

In Step C, using the desired wavelet W($\omega$) and the time derivative of the groundforce signal $G_F(t)$, a shaping filter F($\omega$) is produced. The shaping filter can be produced by any known method, including but not limited to, dividing the Fourier transform of the desired short-duration wavelet by the Fourier transform of the time derivative of the actual groundforce signal.

In Step D, the shaping filter F($\omega$) is applied by known methods (e.g. but not limited to either in the time domain or the frequency domain), to actual seismic data trace recorded data produced by the signal represented by $G_F(t)$ to produce the processed data T.

In one aspect of the present invention, the shaping filter is expressed and used as $F(\omega)$ (Step C, above), a Fourier transform of the filter. The short-duration wavelet is used as $W(\omega)$ (Step B, above), a Fourier transform of the wavelet and the groundforce is used as $G_F(\omega)$, a Fourier transform of the mathematical representation of the groundforce signal (Step A) above.

For this particular embodiment of the invention, the following notation will be used:

| | |
|---|---|
| $G_F$ | groundforce |
| $G_M$ | measured groundforce |
| D | measured seismic data |
| $R_E$ | earth reflectivity sequence |
| W | desired wavelet |
| $M_E$ | earth filter (e.g. a Q-filter) |

In one aspect groundforce is measured in newtons; the seismic data are voltage traces representative of velocity in meters per second, and $F(\omega)$, $M_E$, $W(\omega)$, and $R_E$ are dimensionless numerical mathematical constructs. The groundforce signal $G_F(t)$ is taken as the representation of the radiated groundforce signal. (Alternatively as mentioned above, base plate and reaction mass acceleration could be used instead to produce a computed groundforce signal.) Therefore, in the frequency domain the filter equation is, where $F(\omega)$ is the shaping filter ( a "dot" over the ground force symbol in terms of frequency indicates the time derivative thereof):

$$\overset{\bullet}{G_F}(\omega)\cdot F(\omega) = W(\omega) \Rightarrow F(\omega) = \frac{W(\omega)}{\overset{\bullet}{G_F}(\omega)}$$

The next step is the application of the filter to the raw seismic data $D(\omega)$; $D_C(\omega)$ is the refined data in the frequency domain:

$$D_C(\omega) = F(\omega)\cdot D(\omega) = \frac{W(\omega)}{\overset{\bullet}{G_F}(\omega)}\cdot D(\omega)$$

where the raw seismic data is defined as:

$$D(\omega) = \overset{\bullet}{G_F}(\omega)\cdot R_E(\omega)\cdot M_E(\omega)$$

Therefore the data (T in Fig. 2) after processing are:

$$\frac{W(\omega)}{G_F(\omega)}\cdot \overset{\bullet}{G_F}(\omega)\cdot R_E(\omega)\cdot M_E(\omega) =$$

$$R_E(\omega)\cdot M_E(\omega)\cdot W(\omega) = D_C(\omega) = T$$

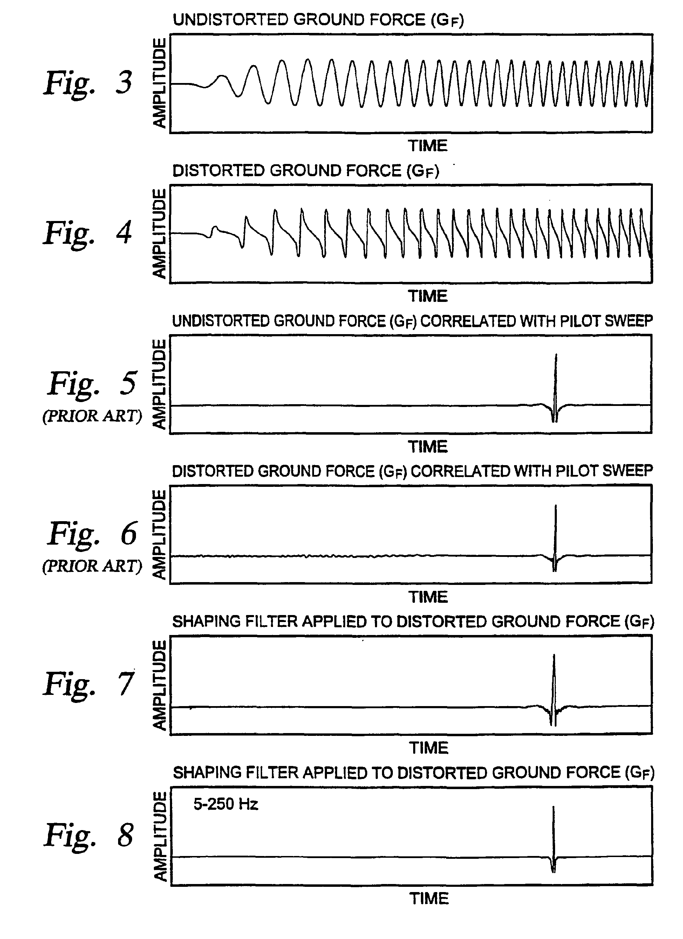

As illustrated in Figs. 3 - 7, use of a known correlation method does not eliminate the effects of non-linear noise from a signal (see Fig. 6) and use of a shaping filter according to the present invention does accomplish this (see Fig. 7). Fig. 7 shows a short duration wavelet according to the present invention that has substantially the same bandwidth as that of the signal of Fig. 3. If the signal of Fig. 3 had a greater bandwidth, then the short duration wavelet would have a bandwidth greater than that of the signal of Fig. 3. It is within the scope of this invention to produce a desired short duration wavelet (as in Fig. 8) with a bandwidth greater than that of a reference sweep signal in a groundforce signal from a vibratory source system. In Figs. 3 - 7, the horizontal axis is a time axis with time increasing from left to right and the vertical axis is an amplitude axis (e.g. measured voltages) with amplitude increasing from bottom to top.

In conclusion, therefore, it is seen that the present invention and the embodiments disclosed herein and those covered by the appended claims are well adapted to carry out the objectives and obtain the ends set forth. Certain changes can be made in the subject matter without departing from the scope of this invention. It is realized that changes are possible within the scope of this invention as defined in the appended claims.

Therefore, the present invention, in certain aspects, discloses a seismic data method for recording and processing vibratory source seismic data, the method including applying with a vibratory source system a groundforce signal into earth at a selected location, said groundforce signal including a reference sweep signal and non-linear noise, said reference signal having a temporal duration, recording with first recording apparatus said groundforce signal, generating a filter for converting a time derivative of said groundforce signal to a short-duration wavelet, recording with second recording apparatus at least one reflection signal from a location within the earth of said groundforce signal, and applying said filter to said at least one reflection signal to refine seismic data represented by said at least one reflection signal producing refined seismic data about the location within the earth; such a seismic data method wherein the short duration wavelet has a temporal duration less than the temporal duration of the reference sweep signal; such a seismic data method wherein the vibratory source system contacts soil and the seismic data method including driving the vibratory source system with sufficient peak force so that creation of non-linear noise in the groundforce signal due to non-linearity of the soil and non-linearity in the vibratory source system is enhanced; such a seismic data method wherein the reference sweep signal has a bandwidth and the filter has a bandwidth greater than that of the reference sweep signal; such a seismic data method wherein the refined seismic data is an improved compressed seismic reflection trace representative of the location within the earth; such a seismic data method wherein the at least one reflection signal is a plurality of reflection signals, each reflecting from a different location within the earth back to the recording apparatus and the method including recording with the recording apparatus the plurality of reflection signals, and applying said filter to each of the plurality of reflection signals; such a seismic data method wherein the at least one reflection signal is a plurality of reflection signals, each reflecting from a different location within the earth back to the recording apparatus, the recording apparatus including a plurality of spaced-apart recording devices each of which receives and records at least one of the plurality of reflection signals, and the method including recording with the recording apparatus the plurality of reflection signals, and applying said filter to each of the plurality of reflection signals; such a seismic data method wherein the vibratory source system is at earth surface and the second recording apparatus is at earth surface spaced-apart from the vibratory source system; such a seismic data system wherein the short-duration wavelet has a bandwidth greater than a bandwidth of the reference sweep signal; such a seismic data method wherein the short-duration wavelet is produced by a method from the group consisting of autocorrelation of the reference sweep signal and a method including designing a zero or minimum phase wavelet with a prescribed amplitude spectrum; such a seismic data method wherein the short-duration wavelet is a Klauder wavelet or a minimum phase wavelet; such a seismic data method wherein the filter is generated by dividing a Fourier transform of the short-duration wavelet by a Fourier transform of a time derivative of the groundforce signal; such a seismic data method wherein the filter is applied to the at least one reflection signal by a circular convolution method; such a seismic data method wherein particles at the location within the earth are moved by the groundforce signal, the particles then having a velocity, and the ground force signal reflecting from an earth layer beneath earth surface producing the at least one reflection signal indicative of reflectivity of earth at that earth layer and wherein the second recording apparatus includes transducer apparatus for sensing velocity of soil particles adjacent the second recording apparatus and the soil particles moved by the at least one reflection signal, and the method including translating with computing apparatus the at least one reflection signal into the seismic data to which the filter is applied; such a seismic data method wherein the groundforce signal is measured directly with a force measuring device at the vibratory source system; such a seismic data method wherein the vibratory source system includes a reaction mass with an interconnected accelerometer and a baseplate with an interconnected accelerometer and a groundforce signal representation is computed from outputs from the accelerometers; such a seismic data method wherein the non-linear noise includes harmonic distortion due to non-linearity in the vibratory source system and in contact of the vibratory source system and the soil; such a seismic data method wherein the first recording apparatus is adjacent the vibratory source system; such a seismic data method wherein the second recording apparatus is adjacent the vibratory source system; such a seismic data method wherein the first and second recording apparatus are adjacent the vibratory source system; such a seismic data method wherein the first and second recording apparatus are remote from the vibratory source system and the method including transmitting with first transmitting apparatus a signal representative of the groundforce signal to the first recording apparatus, and transmitting with second transmitting apparatus a signal representative of the at least one reflection signal to the second recording apparatus; such a seismic data method wherein a computer is interconnected with the vibratory source system and with the first and second recording apparatus and the computer computes the short-duration wavelet and generates the filter; such a seismic data method wherein the computer applies the filter to the at least one reflection signal; such a seismic data method wherein the computer is adjacent the vibratory source system; such a seismic data method wherein the computer is remote from the vibratory source system; such a seismic data method wherein the first and second recording apparatus are a single recording apparatus; and such a seismic data method wherein the first and second transmitting apparatus are a single transmitting apparatus in intercommunication with both the vibratory source system and the recording apparatuses.

The present invention discloses, in certain aspects, a method for making a shaping filter for improving seismic data, the seismic data comprising a reflected signal from earth, the reflected signal comprising the reflection of a noise-containing groundforce signal generated by a vibratory source system, the groundforce signal including a reference sweep signal and non-linear noise, the reference sweep signal having a temporal duration, the method including producing a short-duration wavelet with a temporal duration less than that of the reference sweep signal, and generating the filter by dividing a Fourier transform of the short-duration wavelet by a Fourier transform of a time derivative of the groundforce signal.

The present invention discloses, in certain aspects, a method for making a shaping filter for improving seismic data, the seismic data comprising a reflected signal from earth, the reflected signal comprising the reflection of a noise-containing groundforce signal generated by a vibratory source system, the groundforce signal including a reference sweep signal and non-linear noise, the reference sweep signal having a bandwidth duration, the method including producing a short-duration wavelet with a bandwidth greater than that of the reference sweep signal, and generating the filter by dividing a Fourier transform of the short-duration wavelet by a Fourier transform of a time derivative of the groundforce signal.

## Claims

**1.** A seismic data method for recording and processing vibratory source seismic data, the method comprising

applying with a vibratory source system a groundforce signal into earth at a selected location, said groundforce signal including a reference sweep signal and non-linear noise, said reference signal having a temporal duration, recording with first recording apparatus said groundforce signal, generating a filter for converting a time derivative of said groundforce signal to a short-duration wavelet, recording with second recording apparatus at least one reflection signal from a location within the earth of said groundforce signal, and applying said filter to said at least one reflection signal to refine seismic data represented by said at least one reflection signal producing refined seismic data about the location within the earth.

**2.** The seismic data method of claim 1 wherein the short duration wavelet has a temporal duration less than the temporal duration of the reference sweep signal.

**3.** The seismic data method of claim 1 wherein the vibratory source system contacts soil and the seismic data method further comprising

driving the vibratory source system with sufficient peak force so that creation of non-linear noise in the groundforce signal due to non-linearity of the soil and non-linearity in the vibratory source system is enhanced.

**4.** A seismic data method of claim 1 wherein the reference sweep signal has a bandwidth and the filter has a bandwidth greater than that of the reference sweep signal.

**5.** The seismic data method of claim 1 wherein the refined seismic data is an improved compressed seismic reflection trace representative of the location within the earth.

**6.** The seismic data method of claim 1 wherein
the at least one reflection signal is a plurality of reflection signals, each reflecting from a different location within the earth back to the recording apparatus and the method further comprising

recording with the recording apparatus the plurality of reflection signals, and
applying said filter to each of the plurality of reflection signals.

**7.** The seismic data method of claim 1 wherein
the at least one reflection signal is a plurality of reflection signals, each reflecting from a different location within the earth back to the recording apparatus, the recording apparatus including a plurality of spaced-apart recording devices each of which receives and records at least one of the plurality of reflection signals, and the method further comprising

recording with the recording apparatus the plurality of reflection signals, and
applying said filter to each of the plurality of reflection signals.

8. The seismic data method of claim 1 wherein the vibratory source system is at earth surface and the second recording apparatus is at earth surface spaced-apart from the vibratory source system.

9. The seismic data method of claim 1 wherein the short-duration wavelet has a bandwidth greater than a bandwidth of the reference sweep signal.

10. The seismic data method of claim 1 wherein the short-duration wavelet is produced by a method from the group consisting of autocorrelation of the reference sweep signal and a method including designing a zero or minimum phase wavelet with a prescribed amplitude spectrum.

11. The seismic data method of claim 10 wherein the short-duration wavelet is a Klauder wavelet.

12. The seismic data method of claim 10 wherein the short-duration wavelet is a minimum phase wavelet.

13. The seismic data method of claim 1 wherein the filter is generated by dividing a Fourier transform of the short-duration wavelet by a Fourier transform of a time derivative of the groundforce signal.

14. The seismic data method of claim 1 wherein the filter is applied to the at least one reflection signal by a circular convolution method.

15. The seismic data method of claim 1 wherein particles at the location within the earth are moved by the groundforce signal, the particles then having a velocity, and the ground force signal reflecting from an earth layer beneath earth surface producing the at least one reflection signal indicative of reflectivity of earth at that earth layer and wherein the second recording apparatus includes transducer apparatus for sensing velocity of soil particles adjacent the second recording apparatus and the soil particles moved by the at least one reflection signal, and the method further comprising

translating with computing apparatus the at least one reflection signal into the seismic data to which the filter is applied.

16. The seismic data method of claim 1 wherein the groundforce signal is measured directly with a force measuring device at the vibratory source system.

17. The seismic data method of claim 1 wherein the vibratory source system includes a reaction mass with an interconnected accelerometer and a baseplate with an interconnected accelerometer and a groundforce signal representation is computed from outputs from the accelerometers.

18. The seismic data method of claim 1 wherein the non-linear noise includes harmonic distortion due to non-linearity in the vibratory source system and in contact of the vibratory source system and the soil.

19. The seismic data method of claim 1 wherein the first recording apparatus is adjacent the vibratory source system.

20. The seismic data method of claim 1 wherein the second recording apparatus is adjacent the vibratory source system.

21. The seismic data method of claim 1 wherein the first and second recording apparatus are adjacent the vibratory source system.

22. The seismic data method of claim 1 wherein the first and second recording apparatus are remote from the vibratory source system and the method further comprising

transmitting with first transmitting apparatus a signal representative of the groundforce signal to the first recording apparatus, and
transmitting with second transmitting apparatus a signal representative of the at least one reflection signal to the second recording apparatus.

23. The seismic data method of claim 1 wherein a computer is interconnected with the vibratory source system and with the first and second recording apparatus and the computer computes the short-duration wavelet and generates the filter.

**24.** The seismic data method of claim 23 wherein the computer applies the filter to the at least one reflection signal.

**25.** The seismic data method of claim 23 wherein the computer is adjacent the vibratory source system.

**26.** The seismic data method of claim 23 wherein the computer is remote from the vibratory source system.

**27.** The seismic data method of claim 1 wherein the first and second recording apparatus are a single recording apparatus.

**28.** The seismic data method of claim 22 wherein the first and second transmitting apparatus are a single transmitting apparatus in intercommunication with both the vibratory source system and the recording apparatuses.

**29.** The seismic data method of claim 1,
wherein F(ω) is a function of the filter and

$$F(\omega) = \frac{W(\omega)}{G_F^{\cdot}(\omega)}$$

where

F(ω) = Fourier transform of the filter
W(ω) = Fourier transform of the wavelet
$G_F$ (ω) = Fourier transform of the groundforce signal

the filter applied to the seismic data, D(ω), as F(ω)·D(ω)
where

$$D(\omega) = G_F^{\cdot}(\omega) \cdot R_E(\omega) \cdot M_E(\omega)$$

where

$G_F$ groundforce
$G_M$ measured groundforce
D measured seismic data
$R_E$ earth reflectivity sequence
W desired wavelet
$M_E$ earth filter (e.g. a Q-filter)

and the refined seismic data is T:

$$\frac{W(\omega)}{G_F^{\cdot}(\omega)} \cdot G_F^{\cdot}(\omega) \cdot R_E(\omega) \cdot M_E(\omega) =$$

$$R_E(\omega) \cdot M_E(\omega) \cdot W(\omega) = D_C(\omega) = T$$

**30.** The method of claim 1 wherein F (W) is a function of the filter and the filter is computed as

$$F(\omega) = \frac{W(\omega)}{i\omega G_F}$$

where:

W(ω) = Fourier transform of the desired, short-duration wavelet
$G_F(ω)$ = Fourier transform of the recorded force signal output of the vibrator
F(ω) = Fourier transform of the filter

$$i = \sqrt{-1}; \quad ω = 2\pi f$$

## Patentansprüche

1. Verfahren für seismische Daten, geeignet zum Aufzeichnen und Verarbeiten seismischer Daten einer Schwingungsquelle, umfassend:

   das Anlegen eines Bodenkraftsignals mit einem Schwingungsquellensystem an den Erdboden an einem ausgewählten Ort, wobei das Bodenkraftsignal ein Referenzwobbelsignal und nichtlineares Rauschen enthält, und das Referenzsignal eine zeitliche Dauer aufweist;
   das Aufzeichnen des Bodenkraftsignals mit einer ersten Aufzeichnungsvorrichtung;
   das Erzeugen eines Filters, das eine zeitliche Ableitung des Bodenkraftsignals in ein Kurzzeit-Wavelet umsetzt;
   das Aufzeichnen mindestens eines Reflexionssignals des Bodenkraftsignals von einem Ort innerhalb des Erdbodens mit einer zweiten Aufzeichnungsvorrichtung; und
   das Anwenden des Filters auf das mindestens eine Reflexionssignal, damit die seismischen Daten verfeinert werden, die das mindestens eine Reflexionssignal darstellt, und verfeinerte seismische Daten bezüglich des Orts im Erdboden erzeugt werden.

2. Verfahren für seismische Daten nach Anspruch 1, worin das Kurzzeit-Wavelet eine zeitliche Dauer hat, die geringer ist als die zeitliche Dauer des Referenzwobbelsignals.

3. Verfahren für seismische Daten nach Anspruch 1, worin das Schwingungsquellensystem den Boden berührt und das Verfahren für seismische Daten zudem umfasst:

   das Antreiben des Schwingungsquellensystems mit einer ausreichenden Spitzenkraft, damit die Erzeugung von nichtlinearem Rauschen im Bodenkraftsignal durch die Nichtlinearität des Bodens und die Nichtlinearität im Schwingungsquellensystem gefördert wird.

4. Verfahren für seismische Daten nach Anspruch 1, worin das Referenzwobbelsignal eine Bandbreite besitzt, und das Filter eine Bandbreite hat, die größer ist als die Bandbreite des Referenzwobbelsignals.

5. Verfahren für seismische Daten nach Anspruch 1, worin die verfeinerten seismischen Daten eine verbesserte komprimierte seismische Reflexionsspur sind, die den Ort innerhalb des Erdbodens darstellt.

6. Verfahren für seismische Daten nach Anspruch 1, worin
   das mindestens eine Reflexionssignal eine Anzahl Reflexionssignale umfasst, die jeweils von einem unterschiedlichen Ort innerhalb des Erdbodens zurück zur Aufzeichnungsvorrichtung reflektiert werden, und das Verfahren zudem umfasst:

   das Aufzeichnen der Anzahl Reflexionssignale mit der Aufzeichnungsvorrichtung; und
   das Anwenden des Filters auf jedes Reflexionssignal der Anzahl Reflexionssignale.

7. Verfahren für seismische Daten nach Anspruch 1, worin
   das mindestens eine Reflexionssignal eine Anzahl Reflexionssignale umfasst, die jeweils von einem unterschiedlichen Ort innerhalb des Erdbodens zurück zur Aufzeichnungsvorrichtung reflektiert werden, und die Aufzeichnungsvorrichtung eine Anzahl voneinander entfernte Aufzeichnungsvorrichtungen enthält, von denen jede mindestens ein Reflexionssignal der Anzahl Reflexionssignale empfängt und aufzeichnet, und das Verfahren zudem umfasst:

   das Aufzeichnen der Anzahl Reflexionssignale mit der Aufzeichnungsvorrichtung; und

das Anwenden des Filters auf jedes Reflexionssignal der Anzahl Reflexionssignale.

8. Verfahren für seismische Daten nach Anspruch 1, worin sich das Schwingungsquellensystem an der Erdoberfläche befindet und sich die zweite Aufzeichnungsvorrichtung entfernt vom Schwingungsquellensystem an der Erdoberfläche befindet.

9. Verfahren für seismische Daten nach Anspruch 1, worin das Kurzzeit-Wavelet eine Bandbreite aufweist, die größer ist als eine Bandbreite des Referenzwobbelsignals.

10. Verfahren für seismische Daten nach Anspruch 1, worin man das Kurzzeit-Wavelet mit einem Verfahren erzeugt, das ausgewählt wird aus der Gruppe, die besteht aus der Autokorrelation des Referenzwobbelsignals und einem Verfahren, das das Entwerfen eines null- oder minimalphasigen Wavelets mit einem vorgeschriebenen Amplitudenspektrum enthält.

11. Verfahren für seismische Daten nach Anspruch 10, wobei das Kurzzeit-Wavelet ein Kauder-Wavelet ist.

12. Verfahren für seismische Daten nach Anspruch 10, wobei das Kurzzeit-Wavelet ein minimalphasiges Wavelet ist.

13. Verfahren für seismische Daten nach Anspruch 1, worin das Filter **dadurch** erzeugt wird, dass man eine Fouriertransformierte des Kurzzeit-Wavelets durch eine Fouriertransformierte einer zeitlichen Ableitung des Bodenkraftsignals dividiert.

14. Verfahren für seismische Daten nach Anspruch 1, worin das Filter durch ein kreisförmiges Faltungsverfahren auf das mindestens eine Reflexionssignal angewendet wird.

15. Verfahren für seismische Daten nach Anspruch 1, worin Teilchen an dem Ort innerhalb des Erdbodens von dem Bodenkraftsignal bewegt werden, und die Teilchen anschließend eine Geschwindigkeit aufweisen, und das Bodenkraftsignal von einer Bodenschicht unter der Erdoberfläche reflektiert wird, wodurch das mindestens eine Reflexionssignal entsteht, das das Reflexionsvermögen des Bodens an dieser Bodenschicht darstellt, und worin die zweite Aufzeichnungsvorrichtung eine Umsetzervorrichtung enthält, die die Geschwindigkeit der Bodenteilchen in der Nähe der zweiten Aufzeichnungsvorrichtung erfühlt sowie der Bodenteilchen, die von dem mindestens einen Reflexionssignal bewegt werden, und das Verfahren ferner umfasst:

   das Umwandeln des mindestens einen Reflexionssignals mit einer Computervorrichtung in die seismischen Daten, auf die das Filter angewendet wird.

16. Verfahren für seismische Daten nach Anspruch 1, worin das Bodenkraftsignal direkt mit einer Kraftmessvorrichtung am Schwingungsquellensystem gemessen wird.

17. Verfahren für seismische Daten nach Anspruch 1, worin das Schwingungsquellensystem eine Gegenmasse mit einem angeschlossenen Beschleunigungsmesser und eine Grundplatte mit einem angeschlossenen Beschleunigungsmesser umfasst, und eine Darstellung des Bodenkraftsignals aus den Ausgangssignalen der Beschleunigungsmesser berechnet wird.

18. Verfahren für seismische Daten nach Anspruch 1, worin das nichtlineare Rauschen harmonische Verzerrungen durch Nichtlinearitäten im Schwingungsquellensystem und bei der Berührung von Boden und Schwingungsquellensystem enthält.

19. Verfahren für seismische Daten nach Anspruch 1, wobei sich die erste Aufzeichnungsvorrichtung in der Nähe des Schwingungsquellensystems befindet.

20. Verfahren für seismische Daten nach Anspruch 1, wobei sich die zweite Aufzeichnungsvorrichtung in der Nähe des Schwingungsquellensystems befindet.

21. Verfahren für seismische Daten nach Anspruch 1, wobei sich die erste und die zweite Aufzeichnungsvorrichtung in der Nähe des Schwingungsquellensystems befinden.

22. Verfahren für seismische Daten nach Anspruch 1, wobei sich die erste und die zweite Aufzeichnungsvorrichtung entfernt von dem Schwingungsquellensystem befinden und das Verfahren zudem umfasst:

mit einer ersten Übertragungsvorrichtung das Übertragen eines Signals, das das Bodenkraftsignal darstellt, an die erste Aufzeichnungsvorrichtung; und

mit einer zweiten Übertragungsvorrichtung das Übertragen eines Signals an die zweite Aufzeichnungsvorrichtung, das das mindestens eine Reflexionssignal darstellt.

23. Verfahren für seismische Daten nach Anspruch 1, wobei ein Computer mit dem Schwingungsquellensystem und mit der ersten und der zweiten Aufzeichnungsvorrichtung verbunden ist, und der Computer das Kurzzeit-Wavelet berechnet und das Filter erzeugt.

24. Verfahren für seismische Daten nach Anspruch 23, worin der Computer das Filter auf das mindestens eine Reflexionssignal anwendet.

25. Verfahren für seismische Daten nach Anspruch 23, worin sich der Computer in der Nähe des Schwingungsquellensystems befindet.

26. Verfahren für seismische Daten nach Anspruch 23, worin sich der Computer entfernt vom Schwingungsquellensystem befindet.

27. Verfahren für seismische Daten nach Anspruch 1, wobei es sich bei der ersten und der zweiten Aufzeichnungsvorrichtung um eine einzige Aufzeichnungsvorrichtung handelt.

28. Verfahren für seismische Daten nach Anspruch 22, worin die erste und die zweite Übertragungsvorrichtung eine einzige Übertragungsvorrichtung ist, die sowohl mit dem Schwingungsquellensystem als auch den Aufzeichnungsvorrichtungen verbunden ist.

29. Verfahren für seismische Daten nach Anspruch 1, worin F(ω) eine Funktion des Filters ist und gilt:

$$F(\omega) = \frac{W(\omega)}{\dot{G}_F(\omega)},$$

wobei

F(ω) = Fouriertransformierte des Filters,
W(ω) = Fouriertransformierte des Wavelets,
$G_F$(ω) = Fouriertransformierte des Bodenkraftsignals sind,

und das Filter auf die seismischen Daten D(ω) angewendet wird, nämlich als F(ω)

$$\cong D(\omega), \text{ wobei gilt}$$

$$D(\omega) = \dot{G}_F(\omega) \cdot R_E(\omega) \cdot M_E(\omega)$$

und

$G_F$ die Bodenkraft,
$G_M$ die gemessene Bodenkraft,
D die gemessenen seismischen Daten,
$R_E$ die Folge des Bodenreflexionsvermögens,
W das gewünschtes Wavelet,
$M_E$ das Bodenfilter (z. B. ein Q-Filter) sind, und
T die verfeinerten seismischen Daten sind, wobei gilt:

$$\frac{W(\omega)}{G_F^{\cdot}(\omega)} \cdot G_F^{\cdot}(\omega) \cdot R_E(\omega) \cdot M_E(\omega) =$$

$$R_E(\omega) \cdot M_E(\omega) \cdot W(\omega) = D_C(\omega) = T \ .$$

**30.** Verfahren nach Anspruch 1, wobei F(W) eine Funktion des Filters ist und das Filter berechnet wird als

$$F(\omega) = \frac{W(\omega)}{i\,\omega\,G_F} \ ,$$

und gilt:

W($\omega$) = Fouriertransformierte des gewünschten Kurzzeit-Wavelets,
G$_F$($\omega$) = Fouriertransformierte des aufgezeichneten Kraftsignals, das der Schwinger ausgibt,
F($\omega$) = Fouriertransformierte des Filters,

$$i = \sqrt{-1}; \quad \omega = 2\,\pi\,f \ .$$

**Revendications**

1. Procédé de traitement de données sismiques pour l'enregistrement et le traitement de données sismiques d'une source vibratoire, le procédé comprenant

l'application à l'aide d'un système de source vibratoire d'un signal de force de sol dans la terre en un emplacement sélectionné, ledit signal de force de sol comprenant un signal de balayage de référence et un bruit non linéaire, ledit signal de référence ayant une durée temporelle,
l'enregistrement dudit signal de force de sol à l'aide d'un premier appareil d'enregistrement,
la génération d'un filtre pour convertir une dérivée par rapport au temps dudit signal de force de sol en une ondelette de courte durée,
l'enregistrement à l'aide d'un second appareil d'enregistrement d'au moins un signal de réflexion provenant d'un emplacement dans la terre dudit signal de force de sol, et
l'application dudit filtre audit, au moins un, signal de réflexion pour affiner des données sismiques représentées par ledit, au moins un, signal de réflexion, produisant des données sismiques affinées concernant l'emplacement dans la terre.

2. Procédé de traitement de données sismiques selon la revendication 1, dans lequel l'ondelette de courte durée a une durée temporelle inférieure à la durée temporelle du signal de balayage de référence.

3. Procédé de traitement de données sismiques selon la revendication 1, dans lequel le système de source vibratoire est en contact avec le sol et le procédé de traitement de données sismiques comprend en outre
l'attaque du système de source vibratoire avec une force de crête suffisante pour que la création d'un bruit non linéaire dans le signal de force de sol dû à un défaut de linéarité du sol et à un défaut de linéarité du système de source vibratoire soit renforcée.

4. Procédé de traitement de données sismiques selon la revendication 1, dans lequel le signal de balayage de référence a une bande passante et le filtre a une bande passante plus grande que celle du signal de balayage de référence.

5. Procédé de traitement de données sismiques selon la revendication 1, dans lequel les données sismiques affinées constituent une trace de réflexion sismique comprimée améliorée représentative de l'emplacement dans la terre.

6. Procédé de traitement de données sismiques selon la revendication 1, dans lequel le, au moins un, signal de réflexion est une pluralité de signaux de réflexion, revenant chacun par réflexion depuis un emplacement différent dans la terre jusqu'à l'appareil d'enregistrement, et le procédé comprenant en outre l'enregistrement avec l'appareil d'enregistrement de la pluralité de signaux de réflexion, et l'application dudit filtre à chacun de la pluralité de signaux de réflexion.

7. Procédé de traitement de données sismiques selon la revendication 1, dans lequel le, au moins un, signal de réflexion est une pluralité de signaux de réflexion, revenant chacun par réflexion depuis un emplacement différent dans la terre à l'appareil d'enregistrement, l'appareil d'enregistrement comprenant une pluralité de dispositifs d'enregistrement espacés dont chacun reçoit et enregistre au moins l'un de la pluralité de signaux de réflexion, et le procédé comprenant en outre l'enregistrement avec l'appareil d'enregistrement de la pluralité de signaux de réflexion, et l'application dudit filtre à chacun de la pluralité de signaux de réflexion.

8. Procédé de traitement de données sismiques selon la revendication 1, dans lequel le système de source vibratoire est à la surface de la terre et le second appareil d'enregistrement est à la surface de la terre, à distance du système de source vibratoire.

9. Procédé de traitement de données sismiques selon la revendication 1, dans lequel l'ondelette de courte durée a une bande passante plus grande que la bande passante de signal de balayage de référence.

10. Procédé de traitement de données sismiques selon la revendication 1, dans lequel l'ondelette de courte durée est produite par un procédé provenant du groupe constitué d'une autocorrélation du signal de balayage de référence et d'un procédé comprenant la désignation d'une ondelette de phase nulle ou minimale avec un spectre d'amplitude prescrit.

11. Procédé de traitement de données sismiques selon la revendication 10, dans lequel l'ondelette de courte durée est une ondelette de Klauder.

12. Procédé de traitement de données sismiques selon la revendication 10, dans lequel l'ondelette de courte durée est une ondelette de phase minimale.

13. Procédé de traitement de données sismiques selon la revendication 1, dans lequel le filtre est généré par la division d'une transformée de Fourier de l'ondelette de courte durée par une transformée de Fourier d'une dérivée par rapport au temps du signal de force de sol.

14. Procédé de traitement de données sismiques selon la revendication 1, dans lequel le filtre est appliqué au, au moins un, signal de réflexion par un procédé à convolution circulaire.

15. Procédé de traitement de données sismiques selon la revendication 1, dans lequel des particules à l'emplacement se trouvant dans la terre sont déplacées par le signal de force de sol, les particules ayant alors une vitesse, et le signal de force de sol revenant par réflexion depuis une couche de la terre située au-dessous de la surface de la terre produisant le, au moins un, signal de réflexion représentatif de la réflectivité de la terre à cette couche de la terre, et dans lequel le second appareil d'enregistrement comprend un appareil transducteur destiné à capter la vitesse de particules du sol adjacentes au second appareil d'enregistrement et des particules du sol déplacées par le, au moins un, signal de réflexion, et le procédé comprenant en outre la traduction à l'aide d'un appareil de calcul du, au moins un, signal de réflexion en les données sismiques auxquelles le filtre est appliqué.

16. Procédé de traitement de données sismiques selon la revendication 1, dans lequel le signal de force de sol est mesuré directement à l'aide d'un dispositif de mesure de force au système de source vibratoire.

17. Procédé de traitement de données sismiques selon la revendication 1, dans lequel le système de source vibratoire comprend une masse de réaction avec un accéléromètre interconnecté et une plaque de base avec un accéléromètre interconnecté, et une représentation du signal de force de sol est calculée à partir des signaux de sortie des accéléromètres.

18. Procédé de traitement de données sismiques selon la revendication 1, dans lequel le bruit non linéaire comprend une distorsion harmonique due à un manque de linéarité du système de source vibratoire et dans le contact du système de source vibratoire et du sol.

**19.** Procédé de traitement de données sismiques selon la revendication 1, dans lequel le premier appareil d'enregistrement est adjacent au système de source vibratoire.

**20.** Procédé de traitement de données sismiques selon la revendication 1, dans lequel le second appareil d'enregistrement est adjacent au système de source vibratoire.

**21.** Procédé de traitement de données sismiques selon la revendication 1, dans lequel les premier et second appareils d'enregistrement sont adjacents au système de source vibratoire.

**22.** Procédé de traitement de données sismiques selon la revendication 1, dans lequel les premier et second appareils d'enregistrement sont éloignés du système de source vibratoire et le procédé comprenant en outre
la transmission à l'aide d'un premier appareil d'émission d'un signal représentatif du signal de force de sol au premier appareil d'enregistrement, et
la transmission, à l'aide d'un second appareil d'émission, d'un signal représentatif du, au moins un, signal de réflexion au second appareil d'enregistrement.

**23.** Procédé de traitement de données sismiques selon la revendication 1, dans lequel un ordinateur est interconnecté avec le système de source vibratoire et avec les premier et second appareils d'enregistrement et l'ordinateur calcule l'ondelette de courte durée et génère le filtre.

**24.** Procédé de traitement de données sismiques selon la revendication 23, dans lequel l'ordinateur applique le filtre au, au moins un, signal de réflexion.

**25.** Procédé de traitement de données sismiques selon la revendication 23, dans lequel l'ordinateur est adjacent au système de source vibratoire.

**26.** Procédé de traitement de données sismiques selon la revendication 23, dans lequel l'ordinateur est éloigné du système de source vibratoire.

**27.** Procédé de traitement de données sismiques selon la revendication 1, dans lequel les premier et second appareils d'enregistrement sont un seul appareil d'enregistrement.

**28.** Procédé de traitement de données sismiques selon la revendication 22, dans lequel les premier et second appareils d'émission sont un seul appareil d'émission en intercommunication avec à la fois le système de source vibratoire et les appareils d'enregistrement.

**29.** Procédé de traitement de données sismiques selon la revendication 1,
dans lequel F(ω) est une fonction du filtre et

$$F(\omega) = \frac{W(\omega)}{G_F(\omega)}$$

où

F(ω) = transformée de Fourier du filtre
W(ω) = transformée de Fourier de l'ondelette
G$_F$(ω) = transformée de Fourier du signal de force de sol,

le filtre appliqué aux données sismiques,
D(ω) sous la forme F(ω)·D(ω)
où

$$D(\omega) = G_F'(\omega) \cdot R_E(\omega) \cdot M_E(\omega)$$

où

$G_F$ = force de sol
$G_M$ = force de sol mesurée
D = données sismiques mesurées
$R_E$ = séquence de réflectivité de la terre
W = ondelette souhaitée
$M_E$ = filtre de la terre (par exemple un filtre Q)

et les données sismiques affinées sont T :

$$\frac{W(\omega)}{G_P'(\omega)} \cdot G_P'(\omega) \cdot R_E(\omega) \cdot M_E(\omega) =$$

$$\cdot R_E(\omega) \cdot M_E(\omega) \cdot W(\omega) = D_C(\omega) = T$$

**30.** Procédé selon la revendication 1, dans lequel F(W) est une fonction du filtre et le filtre est calculé sous la forme

$$F(\omega) = \frac{W(\omega)}{i\omega G_P}$$

où

$W(\omega)$ = transformée de Fourier de l'ondelette de courte durée souhaitée
$G_F(\omega)$ = transformée de Fourier du signal de force enregistré en sortie du vibrateur,
$F(\omega)$ = transformée de Fourier du filtre

$$i = \sqrt{-1}; \quad \omega = 2\pi f$$

*Fig. 1*

EP 0 953 179 B1

Fig. 2

UNDISTORTED GROUND FORCE (G$_F$)

*Fig. 3*

TIME

DISTORTED GROUND FORCE (G$_F$)

*Fig. 4*

TIME

UNDISTORTED GROUND FORCE (G$_F$) CORRELATED WITH PILOT SWEEP

*Fig. 5*
*(PRIOR ART)*

TIME

DISTORTED GROUND FORCE (G$_F$) CORRELATED WITH PILOT SWEEP

*Fig. 6*
*(PRIOR ART)*

TIME

SHAPING FILTER APPLIED TO DISTORTED GROUND FORCE (G$_F$)

*Fig. 7*

TIME

SHAPING FILTER APPLIED TO DISTORTED GROUND FORCE (G$_F$)

*Fig. 8*

5-250 Hz

TIME

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5550786 A